(19) Europäisches Patentamt
European Patent Office
Office européen des brevets

(11) **EP 2 525 049 A2**

(12) **EUROPEAN PATENT APPLICATION**

(43) Date of publication:
**21.11.2012 Bulletin 2012/47**

(51) Int Cl.:
***F01D 21/00*** *(2006.01)*

(21) Application number: **12166335.5**

(22) Date of filing: **02.05.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.05.2011 GB 201108170**

(71) Applicant: **Rolls-Royce plc
London SW1E 6AT (GB)**

(72) Inventor: **McMillan, Alison
Uttoxeter, Staffordshire ST14 7BY (GB)**

(74) Representative: **Roberts, Nicholas John et al
Rolls-Royce plc
Intellectual Property
SinB-38, P.O. Box 31
Derby Derbyshire DE24 8BJ (GB)**

(54) **System and method for improving the damage tolerance of a rotor assembly**

(57) A system and a method are provided for improving the damage tolerance of a rotor assembly. The system includes one or more measurement subsystems (30, 31, 32) for measuring the stresses in respective parts of the rotor assembly and issuing respective measurement signals. The system also includes a control subsystem (101) for receiving the measurement signals from the measurement subsystems, determining a response to measured stresses indicative of crack growth, and issuing response signals. The system also includes one or more release subsystems for receiving respective response signals, and activating controlled release of material from respective parts of the rotor assembly to mitigate the effect of the crack growth.

Fig.3

## Description

The present invention relates to a system and a method for improving the damage tolerance of a rotor assembly, such as, for example, a ducted fan or an open rotor of an aero gas turbine engine.

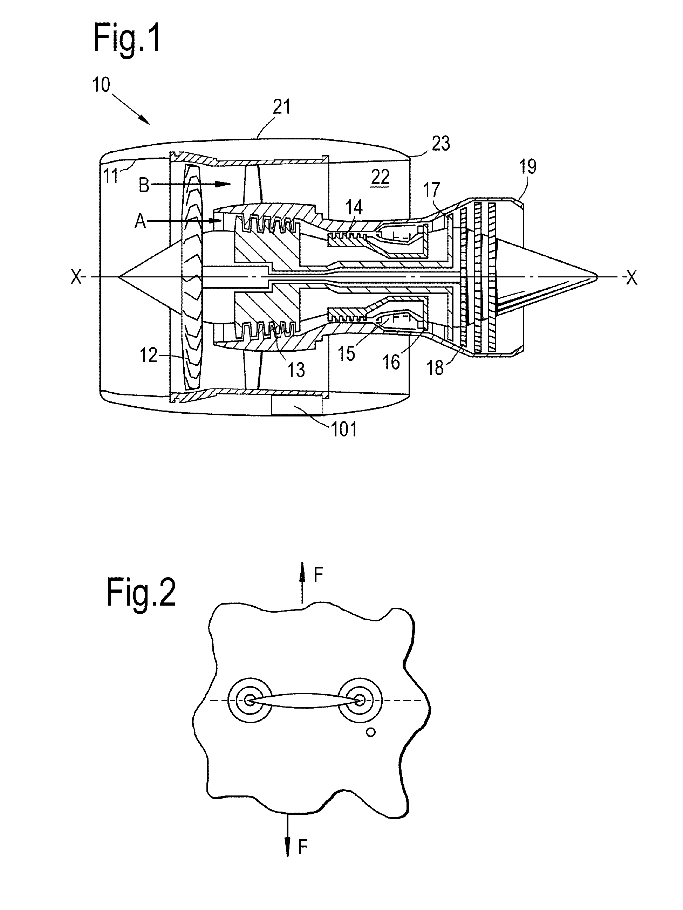

With reference to Figure 1, a ducted fan gas turbine engine generally indicated at 10 has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 14 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

Open rotor propeller gas turbine engines similarly have, in flow series, an air intake followed by compressors, combustion equipment, turbines and an exhaust nozzle. However, in both pusher type and puller type configurations, they generally have a free power turbine between the low-pressure turbine and the exhaust nozzle. Contra-rotating propellers with respective blade arrays may be attached to and driven by the free power turbine. In both configurations, the propellers normally provide the majority of the propulsive thrust.

Rotors rotating at high angular velocities experience high radial stresses, as a result of centripetal forces. These stresses are higher for higher angular velocities, or for higher mass distribution towards the tip of the rotor. In an open rotor propeller gas turbine engine, the blades of the propeller, are critical components. The rotor discs of the compressors and turbines of gas turbine engines are also critical components. Further, the fan blades of a ducted fan gas turbine engine, although protected by a fan case, can cause significant damage if released. It is thus important to prevent cracks growing in such components, or to mitigate the effects of cracks, as these can lead to component failure. A failing blade or rotor presents two types of hazard:

- A released blade or rotor part has high kinetic energy and can cause severe damage if it strikes another part of the engine, the aircraft or a nearby aircraft.
- Post-failure, significant out-of-balance loads can be imposed on remaining rotors. These loads can impart high stresses on the engine bearing system, preventing the remaining rotors from rotating at high speeds. Damage to the engine drive mechanism and loss of thrust from the engine can follow.

Conventionally, rotor components are designed and manufactured such that any cracks (or flaws which could develop into cracks) that arise from either the manufacturing process or subsequent normal handling, are sufficiently small such that there will be no crack growth under normal component operating conditions. Nonetheless, if larger cracks do develop, e.g. as a result of unusual operating conditions, fatigue growth of the crack in at least metallic components can be predicted using a power law, such as the Paris equation. Under sufficient load levels, rapid and unstable growth of long cracks can eventually take place. Although more complex, similar crack growth and failure behaviours are known for composite materials. Unusual operating conditions which can lead to crack growth and eventual component failure include bird-strike, enemy fire, and act of terrorism.

It would be desirable to provide a system for improving the damage tolerance of a rotor assembly.

A first aspect of the present invention provides a system for improving the damage tolerance of a rotor assembly, the system including:

one or more measurement subsystems for measuring the stresses in respective parts of the rotor assembly and issuing respective measurement signals;
a control subsystem for receiving the measurement signals from the measurement subsystems, determining a response to measured stresses indicative of crack growth, and issuing response signals;
one or more release subsystems for receiving respective response signals, and activating controlled release of material from respective parts of the rotor assembly to mitigate the effect of the crack growth.

Advantageously, by detecting crack growth in the rotor assembly before rapid and unstable crack growth occurs, it is possible for the release subsystems to release material from the rotor assembly which e.g. removes the crack or reduces the load on the crack such that unstable crack growth can be prevented. In this way, although engine performance may be reduced, hazardous failure can be avoided.

The system may have any one or, to the extent that they are compatible, any combination of the following optional features.

The rotor assembly can be a ducted fan or an open rotor of an aero gas turbine engine, the fan or rotor having a row of fan blades. The measurement subsystems can then measure stresses in respective of the blades, and the release subsystems can control release of material from respective of the blades. Shortening an aerofoil blade by removing material form its tip, or removing material from the trailing edge of a blade, while rendering it less capable of producing thrust, does not necessarily prevent it from being capable of duty.

Alternatively, the rotor assembly can be a rotor disc of a gas turbine engine. The or each measurement subsystems can then measure stresses in the disc, and the or each release subsystem can control release of material from the disc, e.g. to effect a reduction in the disc rotation speed by decoupling the disc from adjacent rotating components or to detach blades from the disc. Additionally or alternatively, the or each release subsystem can control release of material from blades of the disc.

The or each measurement subsystem may include one or more strain gauges which measure strains in the respective part of the rotor assembly. However, strain gauges are typically positioned on outside surfaces where they may be subject to erosion and can spoil aerodynamic surfaces. Therefore, preferably the or each measurement subsystem is non-contacting or fully embedded. For example, the or each measurement subsystem may include a full field camera displacement measurement system such as an electronic speckle pattern interferometer for measuring displacements. Additionally or alternatively, the or each measurement subsystem may include Fabry-Perot interferometers for measuring strains, e.g. in which sensors are incorporated into fibre optic fibres. This approach is particularly suitable for composite components (e.g. blades) in which some of the reinforcing fibres can be substituted by fibre based sensors. The fibre optic fibres can be multiplexed into a network (e.g. within a blade). Further, they can be linked up to the control subsystem, also embedded in the rotor assembly or away from the rotor. The release subsystems may also be optically or electronically activated through an embedded network. In this way, the path time from sensing to control and then to release can be kept short. Another option is for the or each measurement subsystem to include a plurality of acoustic sensors which measure the onset of cracking by detecting acoustic emissions. Acoustic signals are produced when a crack extends, and using multiple acoustic sensors it may be possible to triangulate the crack location. In general, in the case of a composite component, it may be possible to embed the measurement subsystems within the very fabric of the component. In the case of a metallic component, it may be necessary to locate the measurement subsystems on the surface of the component.

The or each measurement subsystem may further include a processor arrangement which collects the measurements (which may be in the form of e.g. strains, displacements or acoustic emissions) determines from the measurements the stress in the respective part of the rotor assembly, and issues the measurement signal. For example, the processor arrangement may conveniently be local to the rotor assembly. In contrast, the control subsystem may be external to the rotor assembly and receive measurement signals from a number of different measurement subsystems, and indeed from a number of different rotor assemblies.

The control subsystem may use the measurement signals to predict crack growth, e.g. crack growth rate and/or path direction.

The or each measurement subsystem may include one or more temperature and/or chemical environment sensors for measuring the temperature and/or chemical environment of the respective part of the rotor assembly. The issuing measurement signals may then include temperature and/or chemical environment measurements as well as stress measurements. In this case, the control subsystem may use the stress, and temperature and/or chemical environment measurements to predict crack growth, e.g. crack growth rate and/or path direction.

The or each release subsystem may include one or more charges which on detonation release material from regions of the rotor assembly. Embedding explosive or heat controlled fuse subcomponents in rotors is conventionally performed for the testing of containment casings under rotor impact, the explosive or fuse causing the rotor to become released from the rotor hub and impact the casing. Thus, in a similar fashion, the charge or charges of the or each release subsystem can cause material release. Typically, the or each charge does not give the released material significant additional thrust, but simply causes the severance of the material.

Additionally or alternatively, the or each release subsystem may include a region of the rotor assembly which is formed of a material that undergoes a phase change on application of a predetermined temperature, electrical signal or magnetic signal such that the cohesion of the material breaks down, and a means for applying the temperature, electrical signal or magnetic signal. For example, the phase change might be from one crystalline state to another which has a weak cleavage plane such that the assembly ruptures at the region, or the region may be formed of an electrically deactivatable adhesive.

For example, when the rotor assembly is a ducted fan or an open rotor of an aero gas turbine engine, each release subsystem can include one or more charges which on detonation release material from regions of the respective blade.

The or each release subsystem can further include one or more further charges which on detonation fragment the released material. This fragmentation can help to protect people or property in the vicinity of the rotor assembly from being impacted by large pieces of the released material.

When the measured stresses are indicative of crack growth in part of the rotor assembly, the control subsystem preferably determines a response in which: material is released from that part of the rotor assembly to reduce the load on the crack or to eliminate the crack; and material is released from one or more other parts of the rotor assembly to keep the rotor assembly in balance. For example, in the case of a fan or open rotor, at least part of one blade may be released to reduce the load on the crack or to eliminate the crack, and at least parts of one or more opposing blades may be released to keep the fan or open rotor in balance. Typically, a fan or open rotor containing an even number of blades will still perform effectively if two opposing blades are completely removed or have material removed to the same extent. Similarly, a fan or open rotor containing an odd number of blades may still perform effectively if one blade is removed and the two neighbouring opposing blades are reduced in length to counteract the out-of-balance.

Preferably, the material release is timed to avoid impact of the released material on adjacent bodies. For example, when the rotor assembly is part of an aero gas turbine engine, the material release can be timed to avoid impact on the aircraft body.

When the or each release subsystem includes one or more further charges which on detonation fragment the released material, the response determined by the control subsystem typically includes fragmenting the released material.

A second aspect of the present invention provides a ducted fan or an open rotor of an aero gas turbine engine, the fan or rotor including the system of the first aspect. A third aspect of the present invention provides blade of the ducted fan or the open rotor of the second aspect, the blade including a measurement subsystem and a release subsystem.

A fourth aspect of the present invention provides a rotor disc including the system of the first aspect.

A fifth aspect of the present invention provides a method of improving the damage tolerance of a rotor assembly, the method including the steps of:

measuring stresses in one or more parts of the rotor assembly; and

releasing material from the rotor assembly in response to measured stresses indicative of crack growth, the released material mitigating the effect of the crack growth.

Thus the method can be performed using the system of the first aspect.

The method may have any one or, to the extent that they are compatible, any combination of the following optional features. Further, the method may have features corresponding to optional features of the system of the first aspect.

Material may be released from part of the rotor assembly to reduce the load on the crack or to eliminate the crack, and material may be released from one or more other parts of the rotor assembly to keep the rotor assembly in balance.

The rotor assembly may be a ducted fan or an open rotor of an aero gas turbine engine, the fan or rotor having a row of fan blades. Stresses may then be detected in one of the blades, and material may be released of from one or more of the blades. For example, at least part of the blade in which a crack is detected may be released to reduce the load on the crack or to eliminate the crack, and at least parts of one or more opposing blades may be released to keep the fan or open rotor in balance.

Alternatively, the rotor assembly may be a rotor disc of a gas turbine engine. Stresses may then be detected in the disc, and material may be released from the disc.

Strain gauges or a network of embedded Fabry-Perot interferometers may measure strains in the one or more parts of the rotor assembly, the stresses being determined from the strains.

Charges may be detonated to release the material from the rotor assembly. The released material may be fragmented by the detonation of further charges.

The material release may be timed to avoid impact of the released material on adjacent bodies.

The method may further include the step of reducing the rotational speed of the rotor assembly, e.g. by varying a fuel supply rate, vane angles, amount of power off-take etc.

Embodiments of the invention will now be described by way of example with reference to the accompanying drawings in which:

Figure 1 shows a longitudinal cross-section through a ducted fan gas turbine engine;
Figure 2 shows schematically a typical crack in a component;
Figure 3 shows schematically a blade of a ducted fan or open rotor fitted with a measurement subsystem;
Figure 4 shows schematically a cross-section through a compressor section rotor disc;
Figure 5 shows schematically crack growth in the disc of Figure 4; and
Figure 6 shows schematically material disintegration paths through the disc of Figure 4.
Figure 7 shows a schematic blade with detonator charges and release subsystems

Figure 2 shows schematically a typical crack in a component. The applied force (F) gives rise to a stress field σ denoted by stress contours, the peak stresses being at the ends of the crack. Peak stresses at the crack ends are found for cracks of any shape, orientation or location in a component, the only difference being a shape factor, which might change the shapes and values of the stress contours, although the order of magnitude would be similar.

For small cracks, when there is sufficient surrounding material, the crack does not grow or may grow only very slowly. However, for cracks of sufficient length, and subject to sufficient oscillating force, crack growth can occur under fatigue. This can be exacerbated by chemical environmental effects, and also by thermal cycling or low temperatures. Initially the growth is stable, and given the initial crack length, the peak and the mean applied nominal stress, and number of cycles, the new crack length can be predicted using a power law, such has the Paris equation. Above a certain length, or in response to an applied stress field of sufficient intensity, cracks can grow rapidly and unstably.

Such crack growth behaviour has been well characterised for aerospace metals. Although the characterisation is more complex for composite materials, similar principles apply. Thus, for high duty aerospace engine components, according to one conventional approach the nominal and stresses in a component are analysed, and the design modified until the stress field is kept below the level that would drive a typical manufacturing flaw to become a crack capable of growth. Alternatively, according to a second conventional approach, crack growth can be considered in the design of the component, and each component then given a declared life, which, given an initial size crack (i.e. the largest allowable manufacturing flaw), is the number of cycles that that component is allowed to experience. This approach can also take account of statistical boundaries on the crack size, and tolerances in manufacture and hence variation in size and location of peak stresses from a specific component to the average or "as-designed" component. Typically the components are also subject to regular inspection.

Both approaches to component design assume that the component experiences a normal operating duty. However, abnormal duties can take applied stresses to much higher levels, causing damage that may reduce the life of the component. That is, the abnormal duties can lead to cracks of sufficient length such that the component is brought over or near to the end of its fatigue life even under normal operational stress loadings.

One example of an abnormal duty is a birdstrike. A rotor blade on an aero-engine is typically designed to withstand bird-strike with some run-on capability. However, the life of the blade may be reduced to the point that the aircraft must make a landing. Bird strike tends to happen on take-off or landing (i.e. at low altitude), and so only a relatively short residual life may be needed for an immediate landing after a bird-strike. However, as a released blade can cause severe engine and aircraft damage and can result in significant out-of-balance engine loads, it can be important to ensure that there is no uncontrolled blade loss before the landing can be made.

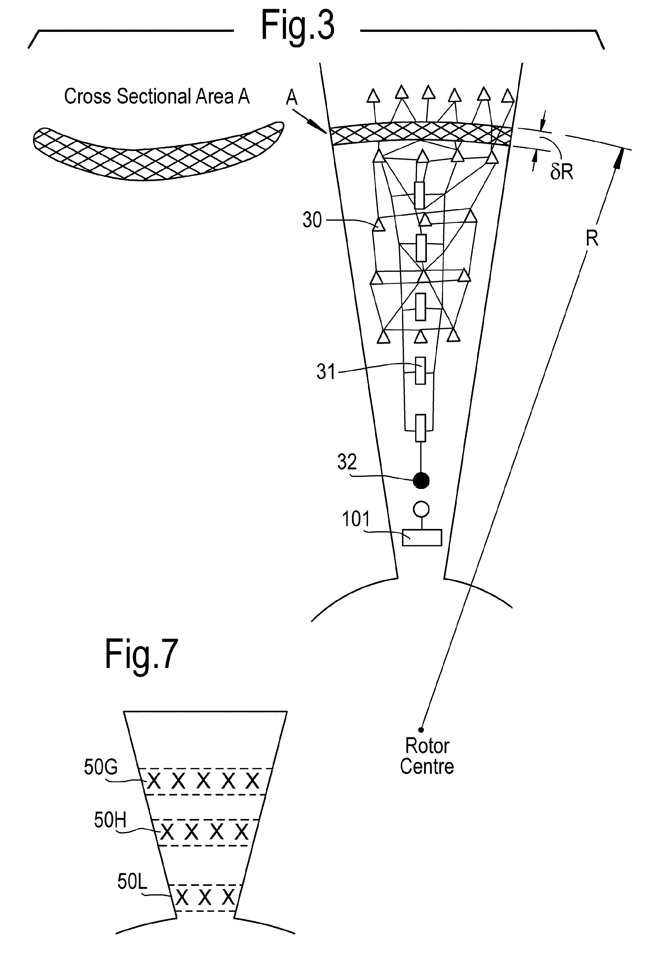

Accordingly, one embodiment of the present invention provides a system for improving the damage tolerance of a ducted fan or open rotor of an aero-engine. Figure 3 shows schematically a blade of a ducted fan or open rotor. The blade contains a number of distributed embedded sensors 30 (represented by filled triangles), such as strain gauges or embedded Fabry-Perot interferometers, which measure the local strain in the blade, and a number of local processor units 31 (represented by filled rectangles). Each processor unit receives measured strains from a portion of the sensors. The processor units are interconnected, and at least one of the units deduces the stress in the blade from the measured strains. Thus together, the embedded sensors and processor units form a measurement subsystem for measuring the stresses in the blade.

Further sensors may be connected to the processor units 31 to monitor temperature and chemical environment.

Signal transfer between the embedded sensors 30 and processor units 31 can be mediated by embedded wires or by wireless technology.

The measurement subsystem can be powered by an embedded power source or energy harvesting mechanism 32 (represented by a filled circle). Alternatively, it can be powered by a remote power source, e.g. it can be connected via embedded wires and a slip ring at centre of the rotor to the electrical system of the engine.

A control subsystem 101, which may be remote from the fan or rotor, receives the measurement signals from the measurement subsystems of the blades of the fan or rotor. For example, the processor units 31 closest to the hub of the fan or rotor can transmit the measurement signals wirelessly or by wired connection to the control subsystem.

From the stress distribution (and optionally the temperature and chemical environment measurements) obtained from the measurement subsystem, the control subsystem is able to identify the presence of a crack, and deduce its location and monitor its length. While the crack is still early in the stable growth regime, no action may be taken. However, when a crack reaches a particular length it may become desirable to slow down the onward crack growth, or divert its path to a more benign direction, for example to run into a crack arrest feature. This can be achieved by reducing the applied stress on the crack. The largest applied stresses are due to the centripetal loading on the rotor, so reducing the angular velocity ($\Omega$) or the mass of the rotor would reduce the stress. However, reducing the angular velocity reduces the engine speed and hence substantially decreases the thrust produced by the engine. Thus an alternative is to reduce the mass of blade material radially outward of the crack. Figure 3 shows a band of material in the blade of thickness length $\delta R$ (cross hatched), at radial height R from the hub. If the cross sectional area at that height is given by A, and the density is p, then the centripetal load F of the band of material on the hub-ward part of the rotor is :

$$F = (\rho A \delta R).\Omega^2 R$$

Thus shedding a band, or successive bands, of material of thickness δR from the tip of the rotor blade can allow the stress field at the location of a growing crack to be reduced to a level where crack growth may be managed at zero or low growth levels. In particular, a major fast failure at mid or lower blade height can be averted by sacrificing just the tip of the blade.

To shed material from the tip of the blade, the system includes a release subsystem formed by small detonation charges 51 located in hollowed out regions of the blade. This is a known technology used in containment testing of rotor casings. On detonation, the blade is locally weakened and material release occurs. The amount of released material (i.e. δR) may be sufficiently small that the released fragment has a sufficiently low mass and therefore low kinetic energy that little or no additional reinforcement of the impact site (e.g. the fan case) is needed.

A release subsystem is shown schematically in Figure 7. In this embodiment there are three release subsystems (50a to 50b) each containing explosive charges 51. These are shown as linear arrays but other array shapes are available. One or more explosive charges may be used.

Like the measurement subsystem, the detonation charges of the release subsystem may be powered by the embedded power source or energy harvesting mechanism 32, or by a remote power source. Response signals triggering material release may be transmitted by the control subsystem wirelessly or by wired connection to the appropriate detonation charges. Alternatively, the signals may be transmitted to one or more of the processor units 31, which then activate the appropriate detonation charges.

If substantial amounts of material are released from one blade, then to maintain overall rotor balance, the same balance weight of material can be shed from the opposing side of the rotor. If there are an even number of blades, then a matching fragment can be shed from the directly opposing blade. If there is an odd number of blades, then a pattern of material can be shed from two or more neighbouring opposing blades. The control subsystem can determine and initiate an appropriate pattern of shedding.

If the crack growth is so severe that shedding small thicknesses of material is insufficient, further thicknesses can successively shed up to the crack location. Corresponding thicknesses can be simultaneously and successively shed from the opposing blade or blades such that, advantageously, the rotor system does not go out of balance. In this way, the rotor can continue operating at normal speed, and the undamaged blades can continue to perform at nearly full duty. The remaining stump of the damaged blade and the opposing blade(s) can also still perform, but with reduced capability. As only small amounts of material are released, and are shed in a controlled way from the tip, the released fragments can clear the engine core intake, and pass without damage through the bypass duct (in the case of a ducted fan). In the case of an open rotor, the fragments may impact the aircraft, but if the fragments are sufficiently small, then significant damage can be prevented or managed. Alternatively, the material release can be timed such that the release the trajectory does not impact the aircraft. For aircraft flying in formation, the timing can also take account of the need to avoid impact on neighbouring aircraft. Another option is to include further detonation charges in the released material, and to time the detonation of these charges such that the released material is fragmented into smaller, less damaging pieces of debris shortly after release. This can be particularly useful in protecting people and property on the ground.

In case of a ducted fan or open rotor, weight savings can be obtained in terms of blade containment or screening from blade impact damage, and an additional benefit that the rotor may still be operational, albeit at reduced thrust, and repairable.

Although described above in relation to the ducted fan or open rotor of an aero-engine, such a system can be applied for improving damage tolerance of rotor assemblies more generally. For example, the system can be used in energy generation devices, such as wind turbines, steam turbines and water turbines, and for controlling disc burst or fly wheel storage situations.

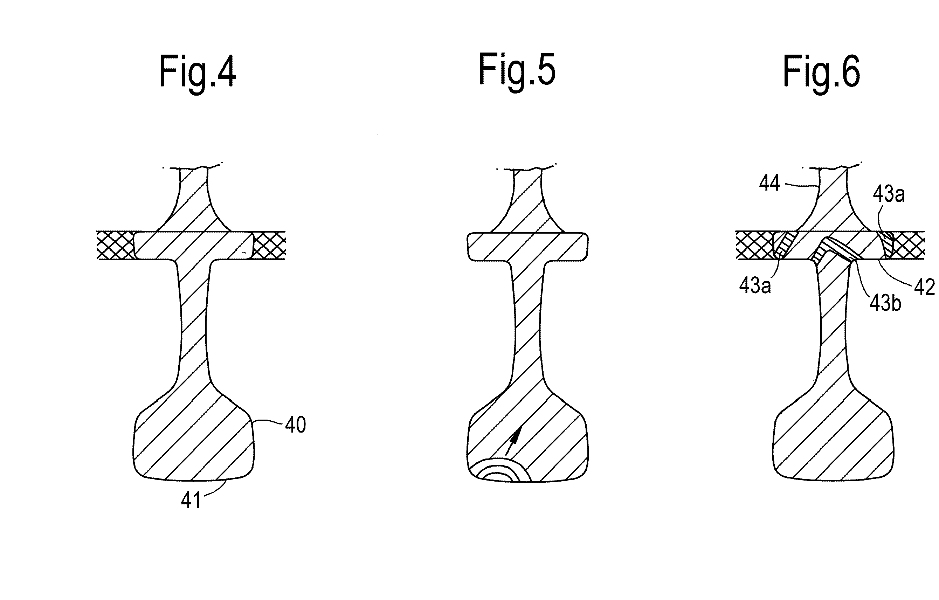

For example, Figure 4 shows schematically a cross-section through a compressor section rotor disc. The rotor disc is bulged at the inner hub 40 because this part sees the highest stresses. A hole 41 through the centre of the disc enables provision of a drive shaft (and optionally concentric drive shafts and/or services). The dashed line shows the central axis of revolution, and the cross-hatched parts indicate physical connection to other rotating components.

The design and statistical properties of such discs are managed to ensure a very low probability of a disc burst. However, occasionally the disc may experience abnormal operating conditions (such as elevated temperatures) which reduce the strength of the material of the disc. In such unusual circumstances, a disc burst may initiate from crack growth of a pre-existing flaw. Figure 5 shows schematically a crack growing radially out from the hub of the disc. If allowed to grow, eventually the inner bore of the disc will be unable to withstand the hoop stress loads, and the disc bursts explosively.

However, if measurement and release subsystems, like those described above in relation to Figure 3, are fitted to the disc, then, when critical stresses are measured in the disc, corrective action may be taken by a control subsystem which receives measurement signals from the measurement subsystem, determines an appropriate response to measured stresses indicative of crack growth, and issues response signals to the release subsystem. The measurement subsystem may also measure the disc temperature and provide that information to the control subsystem.

In particular, if the control subsystem observes critical conditions and there is insufficient time to shut down the engine, there may still be time to release material from the disc or from blades attached to the disc in a way that prevents a full disc burst.

Figure 6 shows for example, three diagonally hatched paths 43a, 43b through the disc rim 42. Activation of the release subsystem can cause the material in these regions to disintegrate, and the material radially outwards of paths to be released from the main body of the disc (although, as discussed below, the released material may be maintained in close proximity to the main body of the disc). Disintegration of the side paths 43a breaks the connection to the upstream and downstream rotating components, and so prevents the disc from following the speed of these components. The side paths are angled so that the upstream and downstream components hold the disc in place and prevent it from moving out of centre. The central path 43b detaches the disc from the blades 44 attached to the disc periphery, so that the blades run down in speed independently of the disc. Being aerofoils, the blades will lose speed more quickly than the disc. The inverted V shape of the path 43b provides a region of friction between the inner part of the disc and an outer ring running down with the blades and maintained in close proximity to the inner part. This helps the inner part of the disc to slow down safely, and holds the disc in place, preventing damage outside of the engine. The inverted V shape helps to prevent the inner part disc of the from moving upstream or downstream. The point of the inverted V shape can be offset to one side, providing greater friction at one side of the V than the other. This can help to balance tensions between the upstream and downstream (now disconnected) components.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

**Claims**

1. A system for improving the damage tolerance of a rotor assembly, the system including:

    one or more measurement subsystems (30,31) for measuring the stresses in respective parts of the rotor assembly and issuing respective measurement signals;

    a control subsystem (101) for receiving the measurement signals from the measurement subsystems, determining a response to measured stresses indicative of crack growth, and issuing response signals;
    one or more release subsystems (50a, 50b, 50c) for receiving respective response signals, and activating controlled release of material from respective parts of the rotor assembly to mitigate the effect of the crack growth.

2. A system according to claim 1, wherein:

    the rotor assembly is a ducted fan or an open rotor of an aero gas turbine engine, the fan or rotor having a row of fan blades;
    the measurement subsystems measure stresses in respective of the blades; and
    the release subsystems control release of material from respective of the blades.

3. A system according to claim 1 or 2, wherein the or each measurement subsystem includes one or more strain gauges (30) which measure strains in the respective part of the rotor assembly.

4. A system according to any one of the previous claims, wherein the or each measurement subsystem includes one or more Fabry-Perot interferometers which measure strains in the respective part of the rotor assembly.

5. A system according to claim 3 or 4, wherein the or each measurement subsystem further includes a processor arrangement (31) which collects the measurements, determines from the measurements the stress in the respective part of the rotor assembly, and issues the measurement signal.

6. A system according to any one of the previous claims, wherein the or each release subsystem includes one or more charges (51) which on detonation release material from regions of the rotor assembly.

7. A system according to claim 6, wherein the or each release subsystem further includes one or more further charges which on detonation fragment the released material.

8. A system according to any one of the previous claims, wherein when the measured stresses are indicative of crack growth in part of the rotor assembly, the control subsystem determines a response in which:

    material is released from that part of the rotor assembly to reduce the load on the crack or to eliminate the crack; and

material is released from one or more other parts of the rotor assembly to keep the rotor assembly in balance.

9. A ducted fan or an open rotor of an aero gas turbine engine, the fan or rotor including the system of claim 2 or the system of any one of claims 3 to 9 as dependent on claim 2.

10. A blade of the ducted fan or the open rotor of claim 9, the blade including a measurement subsystem and a release subsystem.

11. A method of improving the damage tolerance of a rotor assembly, the method including the steps of:

>measuring stresses in one or more parts of the rotor assembly; and
>releasing material from the rotor assembly in response to measured stresses indicative of crack growth, the released material mitigating the effect of the crack growth.

12. A method according to claim 11, wherein material is released from part of the rotor assembly to reduce the load on the crack or to eliminate the crack, and material is released from one or more other parts of the rotor assembly to keep the rotor assembly in balance.

13. A method according to claim 11 or 12, wherein:

>the rotor assembly is a ducted fan or an open rotor of an aero gas turbine engine, the fan or rotor having a row of fan blades;
>stresses are measured in one or more of the blades; and
>material is released of from one or more of the blades.

14. A method according to any one of claims 11 to 13, wherein charges are detonated to release the material from the rotor assembly.

15. A method according to claim 14, wherein the released material is fragmented by the detonation of further charges.

# Fig.1

# Fig.2

# Fig.3

Cross Sectional Area A

A

δR

30

31

32

101

R

Rotor
Centre

# Fig.7

50G

X X X X X

50H

X X X X

50L

X X X

Fig.4    Fig.5    Fig.6